# EUROPEAN PATENT SPECIFICATION

(11) **EP 3 932 759 B1**
(45) Date of publication and mention of the grant of the patent: **19.04.2023**
(21) Application number: 20762726.6
(22) Date of filing: 21.02.2020
(51) Int. Cl.: B60T 17/18, B60T 8/1761, B60T 8/96

(54) **BRAKE CONTROL DEVICE**
BREMSSTEUERUNGSVORRICHTUNG
DISPOSITIF DE COMMANDE DE FREIN

(30) Priority: 25.02.2019 JP 2019032164
(43) Date of publication of application: 05.01.2022
(73) Proprietor: Yamaha Hatsudoki Kabushiki Kaisha, Iwata-shi, Shizuoka 438-8501 (JP)
(72) Inventor: ISHII, Yuya, Kariya-shi, Aichi 448-8688 (JP); KANIE, Toshiyuki, Kariya-shi, Aichi 448-8688 (JP); TAKADA, Hideki, Iwata-shi, Shizuoka 438-8501 (JP); SETO, Hiroaki, Iwata-shi, Shizuoka 438-8501 (JP); HIMENO, Koji, Iwata-shi, Shizuoka 438-8501 (JP)
(74) Representative: Grünecker Patent- und Rechtsanwälte PartG mbB
(86) International application number: PCT/JP2020/007176
(87) International publication number: WO 2020/175391

(56) References cited:
- WO-A1-2018/105583
- JP-A- 2008 213 512
- JP-A- 2018 069 796
- JP-A- 2018 122 623
- JP-B2- 6 355 071
- JP-B2- 6 375 310
- US-A1- 2016 107 519
- US-A1- 2016 167 663
- US-A1- 2018 072 291

## Description

The present disclosure relates to a brake control device.

Conventionally, there has been known a brake control device including a function of executing antilock control for suppressing lock of wheels at the time of braking (divergence between wheel speed and actual vehicle speed; skid) by appropriately switching over between reduction, keeping, and increase of pressure of a wheel cylinder. In such a configuration, under a predetermined situation such as off-road driving, for example, it is sometimes demanded to restrict an effect of antilock control and intentionally lock wheels. Thus, it has been considered to implement, in accordance with an operation of a driver, the switchover from antilock control to antilock reduction control for reducing a suppression degree of wheel lock more than that in the antilock control.

### CITATION LIST

### Patent Literature

Patent Document 1: JP 2008-213512 A

### Problem to be Solved by Invention

On the other hand, upon a request of laws (for example, ECE R78), even when the antilock reduction control is executed in accordance with an operation of a driver, if, for example, a condition of restarting an engine after the driver once stops an engine is satisfied, it sometimes becomes necessary to execute a forcible switchover from the antilock reduction control to the antilock control.

Nevertheless, the above-described condition is satisfied due to occurrence of an unexpected event such as unintended engine stall or an operation mistake of a driver, for example. The laws do not request the forcible switchover from the antilock reduction control to the antilock control even when such an unexpected event occurs. Thus, if a restart of an engine alone is simply set as a trigger of switchover of control, convenience is sometimes impaired by the burden of an operation for returning control to antilock reduction control again when an unexpected event occurs.

One of the objects of the present disclosure is to provide a brake control device and a brake control method that is capable of switching over from antilock reduction control to antilock control in accordance with the intention of a driver without impairing convenience.

According to the present invention said object is solved by a brake control device having the features of independent claim 1. Moreover, according to the present invention said object is solved by a brake control method having the features of independent claim 7. Preferred embodiments are laid down in the dependent claims.

According to the above-described brake control device, a forcible switchover from the antilock reduction control to the antilock control is executed only when a driver intentionally executes a stop operation and thereby stopping the drive source and the vehicle. Thus, the switchover from the antilock reduction control to the antilock control can be implemented in accordance with the intention of a driver without impairing convenience.

### BRIEF DESCRIPTION OF DRAWINGS

FIG. 1 is an exemplary schematic diagram illustrating a configuration of a brake system of a vehicle according to an embodiment;
FIG. 2 is an exemplary schematic block diagram illustrating a function of a brake ECU according to an embodiment;
FIG. 3 is an exemplary schematic block diagram illustrating a state transition of control executed by a brake ECU according to an embodiment;
FIG. 4 is an exemplary schematic flowchart illustrating a series of processes performed when a brake ECU according to an embodiment executes a switchover from ABS prohibition control to ABS permission control in accordance with an operation of an engine switch; and
FIG. 5 is an exemplary schematic flowchart illustrating a series of processes performed when a brake ECU according to an embodiment executes a switchover from ABS permission control to ABS prohibition control in accordance with an operation of an ABS switch.

### DESCRIPTION OF EMBODIMENTS

Hereinafter, an embodiment of the present invention will be described based on the drawings.

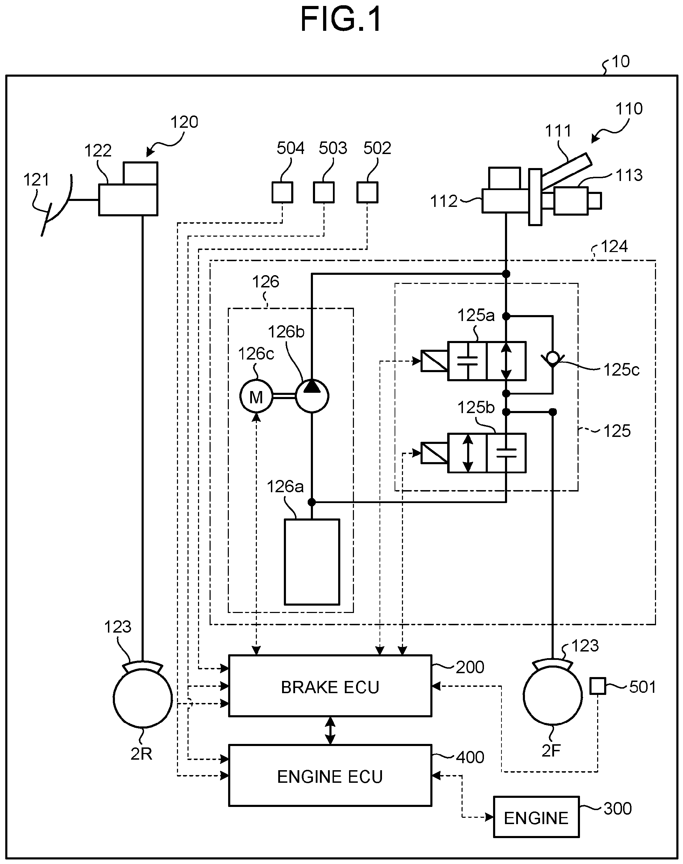

FIG. 1 is an exemplary block diagram illustrating a configuration of a vehicle 10 according to an embodiment. Hereinafter, an example will be described, in which the vehicle 10 according to an embodiment is a two-wheeled vehicle, but the technique of the present disclosure can also be applied to a vehicle other than the two-wheeled vehicle, such as a four-wheeled vehicle, for example.

As illustrated in FIG. 1, the vehicle 10 includes: a brake mechanism 110 that generates braking force by applying pressure to a front wheel 2F being a wheel on the front side; a brake mechanism 120 that generates braking force by applying pressure to a rear wheel 2R being a wheel on the rear side; and a brake electronic control unit (ECU) 200 that controls the brake mechanism 110 on the front wheel 2F side.

In addition, the vehicle 10 includes: an engine 300 serving as a drive source for driving wheels (only the rear wheel 2R is driven in the case of rear wheel driving); and an engine ECU 400 that controls the engine 300. The brake ECU 200 and the engine ECU 400 are connected via an in-vehicle communication network such as a controller area network (CAN), for example, in such a manner that communication can be performed with each other.

The brake mechanism 120 on the rear wheel 2R side includes: a master cylinder 122 that applies pressure in accordance with an operation of a brake pedal 121; and a wheel cylinder 123 that puts a brake on the rear wheel 2R by applying pressure to a frictional brake member based on pressure (fluid pressure) from the master cylinder 122.

In addition, the brake mechanism 110 on the front wheel 2F side includes: a master cylinder 112 that applies pressure in accordance with an operation of a brake lever 111; the wheel cylinder 123 that puts a brake on the front wheel 2F by applying pressure to a frictional brake member based on pressure (fluid pressure) from the master cylinder 112; and a fluid pressure control circuit 124 provided between the master cylinder 112 and the wheel cylinder 123. The fluid pressure control circuit 124 includes: a fluid pressure adjustment unit 125 that adjusts fluid pressure to be applied to the wheel cylinder 123; and a reflux mechanism 126 that returns fluid on the downstream side (the wheel cylinder 123 side) to an upstream side (the master cylinder 112 side).

The fluid pressure adjustment unit 125 includes solenoid valves 125a and 125b for electrically switching between an open state and a closed state, and a check valve 125c provided in parallel to the solenoid valve 125a. In addition, the reflux mechanism 126 includes a reservoir 126a that temporarily stores brake fluid (fluid), a pump 126b that pumps up fluid from the reservoir 126a, and a motor 126c that drives the pump 126b. Note that the solenoid valve 125a is provided between the wheel cylinder 123 and the master cylinder 112, and the solenoid valve 125b is provided between the wheel cylinder 123 and the reservoir 126a.

The brake ECU 200 is a control unit including hardware, such as a processor and a memory, similar to a general purpose computer. The brake ECU 200 controls the fluid pressure control circuit 124 serving as a braking force adjustment mechanism that adjusts braking force to be applied to a wheel (the front wheel 2F in the example illustrated in FIG. 1). In addition, the brake ECU 200 can use, for control, an output value of a wheel speed sensor 501 that detects a rotating speed (the number of rotations) of the front wheel 2F, the number of rotations of the engine 300, which is acquired from the engine ECU 400, and an operation of a driver input via various operation input units (an ABS switch 502, a power switch 503, an engine switch 504, and the like, which will be described in detail below) provided on the vehicle 10.

Note that, similarly to the brake ECU 200, the engine ECU 400 is also a control unit including hardware, such as a processor and a memory, similar to a general purpose computer. The engine ECU 400 controls an output of the engine 300 based on an operation of a driver, each being input via an accelerator grip 113, the power switch 503, the engine switch 504, and so on.

Here, in an embodiment, the brake ECU 200 increases, maintains, or reduces pressure (braking force) to be generated in the wheel cylinder 123 of the front wheel 2F, by controlling the solenoid valves 125a and 125b of the brake mechanism 110 and the motor 126c. The brake ECU 200 can thereby execute Antilock Blaking System (ABS) control as antilock control for preventing the front wheel 2F from being locked during the braking of the vehicle 10.

While an example that a target of ABS control is the front wheel 2F alone will be described hereinafter, the technique of the present disclosure can also be applied to an example that a target of ABS control is the rear wheel 2R alone and an example that a target of ABS control is both of the front wheel 2F and the rear wheel 2R.

Meanwhile, in the above-described configuration having a function of executing ABS control as the antilock control, it is sometimes demanded to restrict an effect of antilock control and intentionally lock wheels under a predetermined situation such as off-road driving. Thus, it has been considered to implement, in accordance with an operation of a driver, the switchover from the antilock control to the antilock reduction control for reducing a suppression degree of wheel lock more than that in the antilock control.

On the other hand, upon a request of laws (for example, ECE R78), even when antilock reduction control is executed in accordance with an operation of a driver, for example, if a condition of restarting the engine 300 after the driver once stops the engine 300 is satisfied, it sometimes becomes necessary to execute a forcible switchover from antilock reduction control to antilock control.

Nevertheless, the above-described condition is satisfied due to the occurrence of an unexpected event such as unintended engine stall or an operation mistake of a driver, for example. Because the laws do not request the forcible switchover from antilock reduction control to antilock control even when such an unexpected event occurs, if a restart of the engine 300 alone is simply set as a trigger of control switching, convenience is sometimes impaired by the burden of an operation for returning control to antilock reduction control again when an unexpected event occurs. In particular, in the vehicle 10 including the engine switch 504, if a stop operation of the engine 300 is performed using the engine switch 504 in a state in which the power switch 503 is turned on, it is demanded to perform a switchover from antilock reduction control to antilock control in accordance with the intention of a driver.

The embodiment can implement a switchover from the antilock reduction control to the antilock control in accordance with the intention of a driver without impairing convenience, by causing the brake ECU 200 to have functions described later. Note that, hereinafter, a configuration that ABS prohibition control for completely cutting an effect of ABS control is executed as antilock reduction control is exemplified. However, in the technique of the present disclosure, the antilock reduction control is only required to be control for reducing at least part of effects of ABS control, such as control for permitting only lock of the rear wheel 2R, or control for changing ABS control for a predetermined wheel to control for permitting a larger skid than that under normal control, for example. In addition, hereinafter, for clarifying contrast with the ABS prohibition control, ABS control will be sometimes described as ABS permission control.

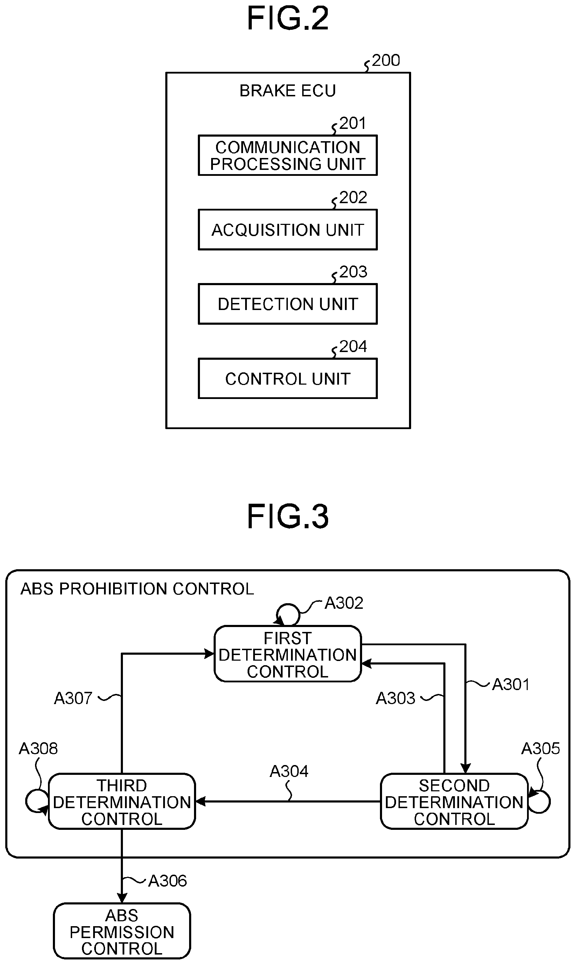

FIG. 2 is an exemplary schematic block diagram illustrating a function of the brake ECU 200 according to an embodiment. Functions illustrated in FIG. 2 are implemented as results that a processor of a brake ECU reads out programs stored in a memory and executes the programs, for example. Note that, in the embodiment, part of or all the functions illustrated in FIG. 2 may be implemented only by dedicated hardware (circuit).

As illustrated in FIG. 2, the brake ECU 200 includes a communication processing unit 201, an acquisition unit 202, a detection unit 203, and a control unit 204.

The communication processing unit 201 controls communication executed via a CAN or the like with a meter ECU (not illustrated) or the like that controls the engine ECU 400 and a meter (not illustrated) on which the ABS switch 502 to be described below is provided.

The acquisition unit 202 acquires an output value of various sensors provided on the vehicle 10, such as the wheel speed sensor 501.

The detection unit 203 detects an operation performed by a driver via various physical operation input units provided on the vehicle 10, such as the ABS switch 502, the power switch 503, and the engine switch 504. Note that the power switch 503 is an example of a "first operation input unit" and the engine switch 504 is an example of a "second operation input unit".

The ABS switch 502 receives an operation of switching between the ABS permission control and the ABS prohibition control. In addition, the power switch 503 receives an operation of switching between power-on and power-off of the (entire) electronic apparatus of the vehicle 10 including the brake ECU 200 and the engine ECU 400. In addition, separately from the power switch 503, the engine switch 504 receives an operation of switching between actuation and stop of the engine 300. Note that the engine switch 504 may include two switches corresponding to an actuation switch for actuating the engine 300 and a stop switch for stopping the engine 300, for example. Alternatively, the engine switch 504 may be configured to actuate the engine 300 by performing a predetermined operation using a single switch and stop the engine 300 by performing another operation using the same single switch. As an example of the latter engine switch 504, it can be considered to employ a configuration of actuating the engine 300 by moving a single switch called a seesaw switch, a toggle switch, or the like in one direction, and stopping the engine 300 by operating the same single switch in a direction different from the one direction.

Note that the ABS switch 502 is provided near a meter (not illustrated) that displays a speed of the vehicle 10 or the like, for example, and the power switch 503 and the engine switch 504 are provided near a steering wheel including the brake lever 111 and the accelerator grip 113, for example.

The control unit 204 selectively executes either the ABS permission control or the ABS prohibition control, by controlling the fluid pressure control circuit 124. In accordance with an operation of the ABS switch 502, the control unit 204 executes a switchover from the ABS permission control to the ABS prohibition control, or a switchover from the ABS prohibition control to the ABS permission control.

Note that, in the embodiment, a switchover of control using the ABS switch 502 is executed only when an operation of the ABS switch 502 is continued for a time that is shorter than a predetermined time length t11 and longer than a predetermined time length t12, as will be described later in detail.

In addition, in the embodiment, a switchover of control using the ABS switch 502 is permitted only in a predetermined case where the following conditions (a1) to (a5) are all satisfied.
(a1) The vehicle 10 has stopped (completely).
(a2) An ABS function itself is not prohibited for fail-safe.
(a3) Signals periodically transmitted from a meter ECU (not illustrated), which controls a meter (not illustrated) to which the ABS switch 502 is provided, to the brake ECU 200 is normally received.
(a4) There is no abnormality in the communication processing unit 201.
(a5) Communication for maintenance, inspection, and the like performed by the communication processing unit 201 is not prohibited.
(a6) Power is normally supplied to the brake ECU 200.

Here, in the embodiment, for satisfying the above-described request of laws, the control unit 204 executes a forcible switchover from the ABS prohibition control to the ABS permission control in dependence on the situation irrespective of an operation of the ABS switch 502. Nevertheless, as described above, depending on the setting of a criterion for a switchover of control, a switchover of control is executed against the intention of a driver, and convenience is impaired in some cases.

Thus, in the embodiment, in accordance with the following state transition diagram illustrated in FIG. 3, the control unit 204 determines a condition of a switchover from the ABS prohibition control to the ABS permission control in three stages at the time of execution of the ABS prohibition control.

FIG. 3 is an exemplary schematic block diagram illustrating a state transition of control executed by the brake ECU 200 according to an embodiment. As illustrated in FIG. 3, in the embodiment, (the control unit 204 of) the brake ECU 200 executes the ABS prohibition control while transitioning between three control modes consisting of first determination control, second determination control, and third determination control.

Upon starting the ABS prohibition control, the control unit 204 first executes the first determination control. The first determination control is control for determining whether or not a stop operation for stopping actuation of the engine 300, which is executed via the engine switch 504, has been detected by the detection unit 203.

In the first determination control during the actuation of the engine 300 (for example, in a state that the number of rotations of the engine 300 exceeds a predetermined value X), when it is determined that a stop operation has been detected, it can be seen that at least an operation of the engine switch 504 has been executed by a driver although it is unclear whether the stop operation is an operation mistake or not. In this case, the control unit 204 shifts the processing from the first determination control to the second determination control for determining whether or not the engine 300 has come to a complete stop in accordance with the stop operation. Then, in the second determination control, the control unit 204 determines whether the stop operation detected in the first determination control is an operation mistake or not (refer to an arrow A301).

On the other hand, in the first determination control while the engine 300 stops (for example, in a state that the number of rotations of the engine 300 is smaller than a predetermined value X), when it is determined that the stop operation has been detected, it can be estimated that the stop operation is a mistake of an actuation operation of actuating the engine 300. Thus, in this case, the control unit 204 continuously executes the first determination control without shifting the processing to the second determination control (refer to an arrow A302).

In the second determination control, when an actuation operation is executed before the engine 300 comes to a complete stop (for example, before the number of rotations of the engine 300 becomes zero) and the actuation operation is continued for a predetermined time length t1 or more, it can be estimated that the stop operation detected in the first determination control is a mistake of an actuation operation. Thus, in this case, the control unit 204 shifts the processing from the second determination control to the first determination control, and waits for the detection of a stop operation again (refer to an arrow A303).

On the other hand, in the second determination control, when the stop operation is maintained, or when the engine 300 comes to a complete stop in a state that an elapsed time from when the actuation operation is executed is shorter than a predetermined time length t1, the control unit 204 shifts the processing from the second determination control to the third determination control (refer to an arrow A304). The third determination control is control for determining whether or not the vehicle 10 has stopped following a complete stop of the engine 300 (for example, whether or not a rotating speed of a wheel obtained based on a detection result of the wheel speed sensor 501 becomes equal to or lower than a predetermined value Y).

Note that the control unit 204 continuously executes the second determination control until either a condition for shifting to the first determination control or a condition for shifting to the third determination control is satisfied, and waits for a complete stop of the engine 300 (refer to an arrow A305).

Here, in the third determination control, when the engine 300 has come to a complete stop and an elapsed time from when the vehicle 10 stops exceeds the predetermined time length t2, it can be estimated that the vehicle 10 stops not due to occurrence of the above-described unexpected event, but due to the driver's intention. Thus, in this case, it can be estimated that the ABS permission control is to be executed at the time of next actuation of the engine 300 in accordance with the request of laws. The control unit 204 therefore shifts the processing from the third determination control to the ABS permission control (refer to an arrow A306).

On the other hand, in the third determination control, when the engine 300 is restarted (for example, the number of rotations of the engine 300 exceeds a predetermined value X) by an operation or push-start of the engine switch 504 before an elapsed time from when the vehicle 10 stops exceeds a predetermined time length t2 after the engine 300 has come to a complete stop, it can be estimated that a driver does not intend to stop the vehicle 10, but the driver intends to continue driving in the ABS prohibition control. Thus, in this case, the control unit 204 shifts the processing from the third determination control to the first determination control, and waits for the detection of a stop operation again (refer to an arrow A307).

Note that the control unit 204 continuously executes the third determination control until either a condition for shifting to the ABS permission control or a condition for shifting to the second determination control is satisfied, and waits for a stop of the vehicle 10 (refer to an arrow A308).

Note that, in the embodiment, the shift of control in the above-described first to third determination control is permitted only in a predetermined case where the following conditions (b 1) to (b7) are all satisfied. If at least one of the following conditions (b 1) to (b7) is not satisfied, the control unit 204 is set to return the processing to the first determination control even in executing the second determination control or the third determination control.
(b1) The ABS prohibition control has been executed.
(b2) An ABS function itself is not prohibited for fail-safe.
(b3) There is no abnormality in the communication processing unit 201.
(b4) Communication for maintenance, inspection, and the like performed by the communication processing unit 201 is not prohibited.
(b5) No abnormality has occurred in a communication function of the engine ECU 400.
(b6) Signals periodically transmitted from by the engine ECU 400 to the brake ECU 200 is normally received.
(b7) Power is normally supplied to the brake ECU 200.

In this manner, in the embodiment, without mechanically executing switchover to the ABS permission control due to restart of the engine 300 in executing the ABS prohibition control, the control unit 204 executes the ABS permission control by switching over from the ABS prohibition control when a stop operation is detected during the execution of the ABS prohibition control, the engine 300 comes to a complete stop, and the vehicle 10 stops.

More specifically, the control unit 204 executes, together with the ABS prohibition control, the first determination control for determining whether a stop operation has been detected or not. In response to determining, in the first determination control, that a stop operation has been detected, the control unit 204 executes the second determination control for determining whether or not the engine 300 has come to a complete stop. At this time, the control unit 204 executes the second determination control in response to determining that a stop operation has been detected in the first determination control during the actuation of the engine 300, whereas the control unit 204 continues executing the first determination control in response to determining that a stop operation has been detected in the first determination control during the stop of the engine 300. Then, in response to determining that the engine 300 has come to a complete stop in the second determination control, the control unit 204 executes the third determination control for determining whether the vehicle 10 has stopped or not. In response to determining that the vehicle 10 has stopped in the third determination control, The control unit 204 executes the ABS permission control by switching over from the ABS prohibition control.

Note that, when an actuation operation is detected before the engine 300 comes to a complete stop after a stop operation is detected during the execution of the ABS prohibition control, the control unit 204 continues executing the ABS prohibition control. In addition, when an actuation operation is detected before the vehicle 10 stops after a stop operation is detected during the execution of the ABS prohibition control and the engine 300 comes to a complete stop, the control unit 204 continues executing the ABS prohibition control.

Next, a flow of processing executed in the embodiment will be described.

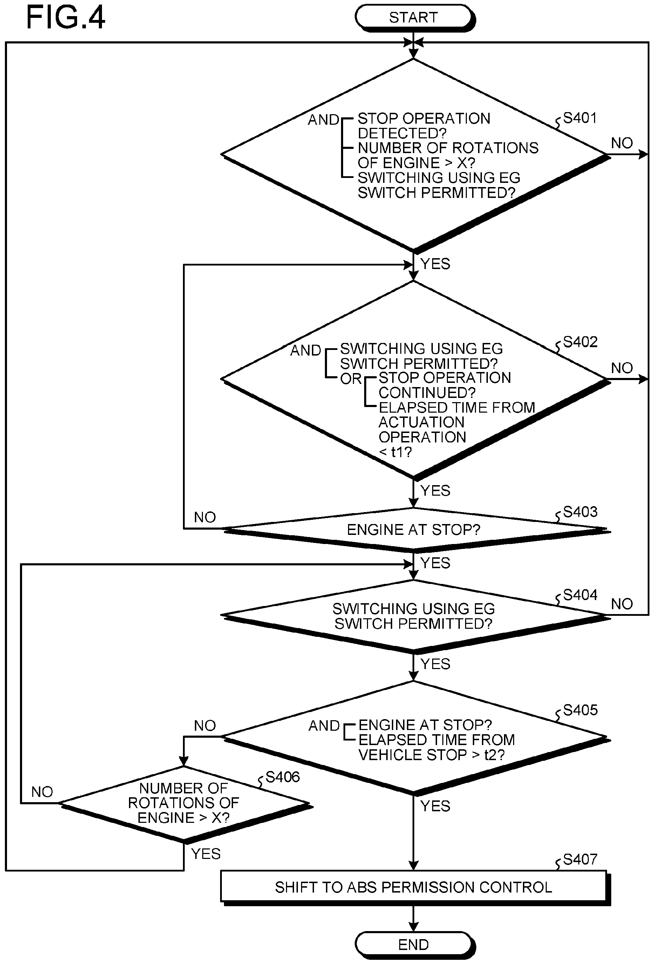

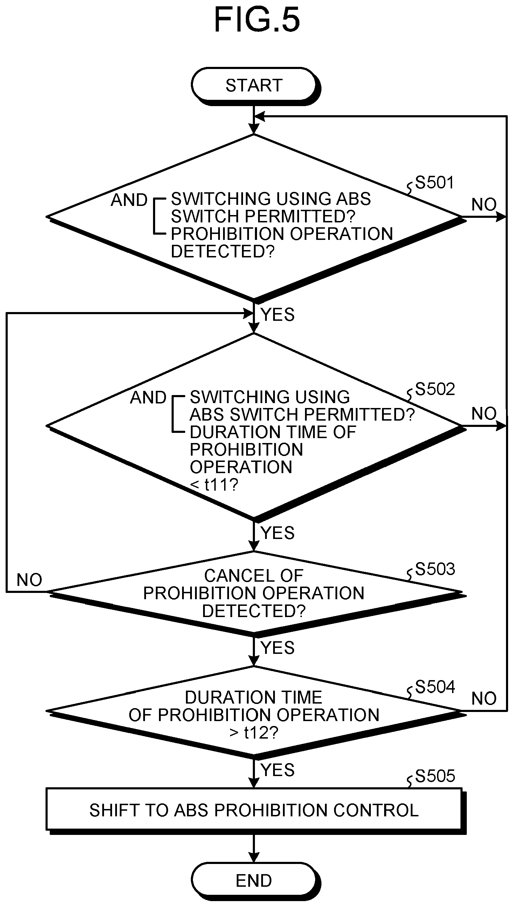

FIG. 4 is an exemplary schematic flowchart illustrating a series of processes performed when the brake ECU 200 according to an embodiment switches over from the ABS prohibition control to the ABS permission control in accordance with an operation of the engine switch 504. The series of processes illustrated in FIG. 4 are started when a switchover from the ABS permission control to the ABS prohibition control is executed in accordance with an operation of the ABS switch 502 (refer to FIG. 5 to be described below). Note that, in FIG. 4, the engine switch 504 is depicted as an "EG switch".

As illustrated in FIG. 4, in the embodiment, first of all, the control unit 204 of the brake ECU 200 executes the first determination control in Step S401 and determines whether all the following conditions (c1) to (c3) are satisfied or not.
(c1) A stop operation performed via the engine switch 504 has been detected by the detection unit 203.
(c2) The number of rotations of the engine 300, which is acquired from the engine ECU 400 by the communication processing unit 201, exceeds a predetermined value X (or the number of rotations of the engine 300 becomes larger than the predetermined value X).
(c3) Switchover of control using the engine switch 504 is permitted in accordance with all the above-described conditions (b 1) to (b7) being satisfied.

The processing in Step S401 is repeatedly executed until determining that all the above-described conditions (c1) to (c3) are satisfied. Then, in response to determining, in Step S401, that all the above-described conditions (c1) to (c3) are satisfied, the processing proceeds to Step S402.

Then, in Step S402, the control unit 204 of the brake ECU 200 executes the second determination control and determines whether both of the following conditions (d1) and (d2) are satisfied or not.
(d1) Switchover of control using the engine switch 504 is permitted in accordance with all the above-described conditions (b 1) to (b7) being satisfied.
(d2) A stop operation performed via the engine switch 504 is maintained, or an elapsed time from when an actuation operation is executed via the engine switch 504 is shorter than a predetermined time length t1.

In response to determining, in Step S402, that at least one of the above-described conditions (d1) and (d2) is not satisfied, the processing returns to Step S401. On the other hand, in response determining, in Step S402, that both of the above-described conditions (d1) and (d2) are satisfied, the processing proceeds to Step S403.

Then, in Step S403, the control unit 204 of the brake ECU 200 determines whether or not the engine 300 has come to a complete stop (for example, whether or not the number of rotations of the engine 300 becomes zero).

In response to determining, in Step S403, that the engine 300 has not stopped completely, the processing returns to Step S402. On the other hand, in response to determining, in Step S403, that the engine 300 has come to a complete stop, the processing proceeds to Step S404.

Then, in Step S404, the control unit 204 of the brake ECU 200 executes the third determination control and determines whether or not a switchover of control using the engine switch 504 is permitted in accordance with all the above-described conditions (b1) to (b7) being satisfied.

In response to determining, in Step S404, that a switchover of control using the engine switch 504 is not permitted, the processing returns to Step S401. On the other hand, in response to determining, in Step S404, that a switchover of control using the engine switch 504 is permitted, the processing proceeds to Step S405.

Then, in Step S405, the control unit 204 of the brake ECU 200 determines whether both of the following conditions (e1) and (e2) are satisfied or not.
(e1) The engine 300 has come to a complete stop.
(e2) An elapsed time from when the vehicle 10 stops (for example, from when a rotating speed of a wheel that is based on a detection result of the wheel speed sensor 501 becomes equal to or lower than a predetermined value Y) exceeds a predetermined time length t2.

In response to determining, in Step S405, that at least one of the above-described conditions (e1) and (e2) is not satisfied, the processing proceeds to Step S406. Then, in Step S406, the control unit 204 determines whether or not the number of rotations of the engine 300 exceeds the predetermined value X (or whether or not the number of rotations of the engine 300 becomes equal to or larger than the predetermined value X).

In response to determining, in Step S406, that the number of rotations of the engine 300 exceeds the predetermined value X, the processing returns to Step S401, and the control unit 204 of the brake ECU 200 executes the first determination control by switching over from the third determination control. Nevertheless, in response to determining, in Step S406, that the number of rotations of the engine 300 is smaller than the predetermined value X, the processing returns to Step S404, and the control unit 204 of the brake ECU 200 continuously executes the third determination control.

Note that, in response to determining, in Step S405, that both of the above-described conditions (e1) and (e2) are satisfied, the processing proceeds to Step S407. Then, in Step S407, the control unit 204 of the brake ECU 200 shifts the processing from the third determination control to the ABS permission control. Then, the processing ends.

In this manner, when a stop operation is detected during the execution of the ABS prohibition control, the engine 300 comes to a complete stop, and the vehicle 10 stops, the brake ECU 200 according to an embodiment executes the ABS permission control by switching over from the ABS prohibition control irrespective of an operation of the ABS switch 502.

On the other hand, a flow of shift from the ABS permission control to the ABS prohibition control is illustrated in FIG. 5.

FIG. 5 is an exemplary schematic flowchart illustrating a series of processes performed when the brake ECU 200 according to an embodiment executes a switchover from the ABS permission control to the ABS prohibition control in accordance with an operation of the ABS switch 502.

As illustrated in FIG. 5, in the embodiment, first of all, the control unit 204 of the brake ECU 200 determines in Step S501 whether both of the following conditions (f1) and (f2) are satisfied or not.
(f1) Switchover of control using the ABS switch 502 is permitted in accordance with all the above-described conditions (a1) to (a5) being satisfied.
(f2) A prohibition operation indicating a request for execution of the ABS prohibition control, which is executed by a driver via the ABS switch 502, is detected by the detection unit 203.

The processing in Step S501 is repeatedly executed until determining that both of the above-described conditions (f1) and (f2) are satisfied. Then, in response to determining, in Step S501, that both of the above-described conditions (f1) and (f2) are satisfied, the processing proceeds to Step S502.

Then, in Step S502, the control unit 204 of the brake ECU 200 determines whether both of the following conditions (g1) and (g2) are satisfied or not.
(g1) Switchover of control using the ABS switch 502 is permitted in accordance with all the above-described conditions (a1) to (a5) being satisfied.
(g2) A duration time of a prohibition operation is shorter than a predetermined time length t11.

In response to determining, in Step S502, that at least one of the above-described conditions (g1) and (g2) is not satisfied, the processing returns to Step S501. On the other hand, in response to determining, in Step S502, that both of the above-described conditions (g1) and (g2) are satisfied, the processing proceeds to Step S503.

Then, in Step S503, the control unit 204 of the brake ECU 200 determines whether or not cancelation of a prohibition operation is detected by the detection unit 203.

In response to determining, in Step S503, that cancelation of a prohibition operation is not detected, the processing returns to Step S502. On the other hand, in response to determining, in Step S503, that cancelation of a prohibition operation is detected, the processing proceeds to Step S504.

Then, in Step S504, the control unit 204 of the brake ECU 200 determines whether or not a duration time from when a prohibition operation is performed to when the prohibition operation is canceled exceeds a predetermined time length t12, which is shorter than the above-described predetermined time length t11.

In response to determining, in Step S504, that a duration time of a prohibition operation is equal to or shorter than the predetermined time length 112, it can be estimated that the detected prohibition operation is an operation mistake. Thus, in this case, the processing returns to Step S501.

On the other hand, in response to determining in Step S504 that a duration time of a prohibition operation exceeds a predetermined time length t12, it can be estimated that the detected prohibition operation is not an operation mistake. Thus, in this case, the processing proceeds to Step S502, and in Step S502, the control unit 204 of the brake ECU 200 shifts the processing from the ABS permission control to the ABS prohibition control. Then, the processing ends.

In this manner, the brake ECU 200 according to an embodiment executes the ABS prohibition control by switching over from the ABS permission control only when a prohibition operation performed via the ABS switch 502 is continued for a predetermined time that is longer than the predetermined time length 112 and shorter than the predetermined time length t11.

Note that, in the embodiment, the switchover from the ABS prohibition control to the ABS permission control using the ABS switch 502 can also be implemented in accordance with a flowchart similar to the flowchart illustrated in FIG. 5, although details thereof will not be described herein. Specifically, separately from the series of processes performed in accordance with the flowchart illustrated in FIG. 4, the brake ECU 200 may execute the ABS permission control by switching over from the ABS prohibition control when a predetermined operation performed via the ABS switch 502 is continued for a predetermined time length. Note that a duration time of the predetermined operation performed via the ABS switch 502 may be set to a sufficiently small value that enables the ABS permission control to be executed, immediately after detecting a predetermined operation, by switching over from the ABS prohibition control.

As described above, the brake ECU 200 according to an embodiment includes the detection unit 203 and the control unit 204. The detection unit 203 detects: an ON operation for turning the power of the vehicle 10 on; and an OFF operation for turning the power off. The ON and OFF operations are executed via the power switch 503 provided on the vehicle 10. The detection unit 203 also detects: an actuation operation for actuating the engine 300; and a stop operation for stopping the actuation of the engine 300. The actuation operation and the stop operation are executed via the engine switch 504 provided on the vehicle 10 separately from the power switch 503. By controlling the fluid pressure control circuit 124, the control unit 204 selectively executes either the ABS permission control serving as antilock control for preventing lock of a wheel or the ABS prohibition control serving as antilock reduction control for reducing a suppression degree of wheel lock more than that in the antilock control.

In the embodiment, the control unit 204 executes the ABS permission control by switching over from the ABS prohibition control when a stop operation is detected during the execution of the ABS prohibition control, the engine 300 comes to a (complete) stop, and the vehicle 10 stops. With such a configuration, a forcible switchover from the ABS prohibition control to the ABS permission control is executed only when a driver intentionally executes a stop operation, the engine 300 stops, and the vehicle 10 stops. Thus, a switchover from the ABS prohibition control to the ABS permission control can be implemented in accordance with the intention of a driver without impairing convenience.

Furthermore, in the embodiment, as described above, the engine switch 504 is provided on a steering wheel (not illustrated) easily operable as compared with the ABS switch 502 provided on a meter (not illustrated). With such a configuration, a switchover from the ABS prohibition control to the ABS permission control can be easily executed.

In addition, in the embodiment, when a stop operation is detected during the execution of the ABS prohibition control, the control unit 204 executes determination control for determining whether a stop of the engine 300 and a stop of the vehicle 10 have been achieved or not. Then, in response to determining, in the determination control, that a stop of the engine 300 and a stop of the vehicle 10 have been achieved, the control unit 204 executes the ABS permission control by switching over from the ABS prohibition control.

More specifically, in the embodiment, together with the ABS prohibition control, the control unit 204 executes first determination control for determining whether a stop operation has been detected or not. Then, in response to determining, in the first determination control, that a stop operation has been detected, the control unit 204 executes second determination control for determining whether the engine 300 has stopped or not. In response to determining, in the second determination control, that the engine 300 has stopped, the control unit 204 executes third determination control for determining whether the vehicle 10 has stopped or not. In response to determining, in the third determination control, that the vehicle 10 has stopped, the control unit 204 executes ABS control by switching over from the ABS prohibition control. With such a configuration, a switchover from the ABS prohibition control to the ABS permission control can be executed only when the engine 300 and the vehicle 10 stop in accordance with an intentional stop operation of a driver.

In addition, in the embodiment, when a stop operation is detected during the execution of the ABS prohibition control in actuating the engine 300, the control unit 204 executes determination control. On the other hand, when a stop operation is detected during the execution of the ABS prohibition control in stopping the engine 300, the control unit 204 avoids executing determination control.

More specifically, in the embodiment, in response to determining, in the first determination control during the actuation of the engine 300, that a stop operation has been detected, the control unit 204 executes the second determination control. In response to determining, in the first determination control while the engine 300 is at a stop, that a stop operation has been detected, the control unit 204 continues executing the first determination control. With such a configuration, it is possible to avoid executing determination control being a step prior to a switchover from the ABS prohibition control to the ABS permission control, conditional upon the detection of a stop operation while the engine 300 is at a stop, which is high likely to be an operation mistake of a driver. More specifically, it is possible to prevent a control state from shifting to the ABS permission control against the intention of a driver even when, for example, a stop operation of the engine 300 is erroneously performed at the time when an actuation operation of the engine 300 is going to be performed after the vehicle 10 stops and a control state shifts to the ABS prohibition control.

In addition, in the embodiment, when an actuation operation is detected before the engine 300 stops after a stop operation is detected during the execution of the ABS prohibition control, the control unit 204 continues executing the ABS prohibition control. With such a configuration, it is possible to prevent a switchover from the ABS prohibition control to the ABS permission control from being executed conditional upon the detection of an actuation operation before the engine 300 stops, which is highly likely to be an operation for canceling a stop operation attributed to the occurrence of an unexpected event.

In addition, in the embodiment, when an actuation operation is detected before the vehicle 10 stops after a stop operation is detected in executing the ABS prohibition control, and the engine 300 stops, the control unit 204 continues executing the ABS prohibition control. With such a configuration, it is possible to prevent a switchover from the ABS prohibition control to the ABS permission control from being executed conditional upon the detection of an actuation operation before the vehicle 10 stops, which is highly likely to be an operation for canceling a stop operation attributed to the occurrence of an unexpected event, and a stop of the engine 300.

### EXPLANATIONS OF LETTERS OR NUMERALS

- 2F: Front wheel (wheel)
- 2R: Rear wheel (wheel)
- 10: Vehicle
- 110, 120: Brake mechanism
- 124: Fluid pressure control circuit (Braking force adjustment mechanism)
- 200: Brake ECU (Brake control device)
- 203: Detection unit
- 204: Control unit
- 300: Engine (Drive source)

## Claims

1. A brake control device (200) of a vehicle (10), the vehicle (10) including a wheel (2F), a brake mechanism (110) that applies braking force to the wheel (2F), a drive source (300) that drives the wheel (2F), and a braking force adjustment mechanism (124) that adjusts the braking force to be applied to the wheel (2F), the brake control device (200) comprising:
a detection unit (203) configured to detect
an ON operation for turning power of the vehicle (10) on and an OFF operation for turning the power off, the ON operation and the OFF operation each being executed via a first operation input unit (503) provided on the vehicle (10), and
an actuation operation for actuating the drive source (300) and a stop operation for stopping actuation of the drive source (300), the actuation operation and the stop operation each being executed via a second operation input unit (504) provided on the vehicle (10) separately from the first operation input unit (503); and
a control unit (204) configured to selectively execute, by controlling the braking force adjustment mechanism (124), either antilock control for suppressing lock of the wheel (2F) or antilock reduction control for reducing a suppression degree of lock of the wheel (2F) more than that in the antilock control,
wherein the control unit (204) executes the antilock control by switching over from the antilock reduction control when the stop operation is detected during execution of the antilock reduction control, the drive source (300) stops, and the vehicle (10) stops.

2. The brake control device (200) according to claim 1, wherein
the control unit (204) is further configured to execute determination control for determining whether a stop of the drive source (300) and a stop of the vehicle (10) are achieved or not, the determination control being executed when the stop operation is detected during execution of the antilock reduction control, and
the control unit (204) executes the antilock control by switching over from the antilock reduction control in response to determining, in the determination control, that a stop of the drive source (300) and a stop of the vehicle (10) are achieved.

3. The brake control device (200) according to claim 2, wherein
the control unit (204) executes the determination control when the stop operation is detected during execution of the antilock reduction control in actuating the drive source (300), and
the control unit (204) avoids executing the determination control when the stop operation is detected during execution of the antilock reduction control in stopping the drive source (300).

4. The brake control device (200) according to any one of claims 1 to 3, wherein the control unit (204) continues executing the antilock reduction control when the actuation operation is detected before the drive source (300) stops after the stop operation is detected during execution of the antilock reduction control.

5. The brake control device (200) according to any one of claims 1 to 4, wherein the control unit (204) continues executing the antilock reduction control when the actuation operation is detected before the vehicle (10) stops after the stop operation is detected during execution of the antilock reduction control and the drive source (300) stops.

6. A vehicle (10) including a wheel (2F), a brake mechanism (110) configured to apply braking force to the wheel (2F), a drive source (300) configured to drive the wheel (2F), a braking force adjustment mechanism (124) configured to adjust the braking force to be applied to the wheel (2F), and a brake control device (200) according to at least one of the claims 1 to 5.

7. A brake control method of a vehicle (10), the vehicle (10) including a wheel (2F), a brake mechanism (110) that applies braking force to the wheel (2F), a drive source (300) that drives the wheel (2F), and a braking force adjustment mechanism (124) that adjusts the braking force to be applied to the wheel (2F), the brake control method comprising:
detecting
an ON operation for turning power of the vehicle (10) on and an OFF operation for turning the power off, the ON operation and the OFF operation each being executed via a first operation input unit (503) provided on the vehicle (10), and
an actuation operation for actuating the drive source (300) and a stop operation for stopping actuation of the drive source (300), the actuation operation and the stop operation each being executed via a second operation input unit (504) provided on the vehicle (10) separately from the first operation input unit (503); and
selectively executing, by controlling the braking force adjustment mechanism (124), either antilock control for suppressing lock of the wheel (2F) or antilock reduction control for reducing a suppression degree of lock of the wheel (2F) more than that in the antilock control, and
executing the antilock control by switching over from the antilock reduction control when the stop operation is detected during execution of the antilock reduction control, the drive source (300) stops, and the vehicle (10) stops.

8. The brake control method according to claim 7, further comprising:
executing determination control for determining whether a stop of the drive source (300) and a stop of the vehicle (10) are achieved or not, the determination control being executed when the stop operation is detected during execution of the antilock reduction control, and
executing the antilock control by switching over from the antilock reduction control in response to determining, in the determination control, that a stop of the drive source (300) and a stop of the vehicle (10) are achieved.

9. The brake control method according to claim 8, further comprising:
executing the determination control when the stop operation is detected during execution of the antilock reduction control in actuating the drive source (300), and
avoiding executing the determination control when the stop operation is detected during execution of the antilock reduction control in stopping the drive source (300).

10. The brake control method according to any one of claims 7 to 9, further comprising:
continuing executing the antilock reduction control when the actuation operation is detected before the drive source (300) stops after the stop operation is detected during execution of the antilock reduction control.

11. The brake control method according to any one of claims 7 to 10, further comprising:
continuing executing the antilock reduction control when the actuation operation is detected before the vehicle (10) stops after the stop operation is detected during execution of the antilock reduction control and the drive source (300) stops.

## Patentansprüche

1. Eine Bremssteuervorrichtung (200) eines Fahrzeugs (10), das Fahrzeug (10) beinhaltet ein Rad (2F), einen Bremsmechanismus (110), der eine Bremskraft auf das Rad (2F) ausübt, eine Antriebsquelle (300), die das Rad (2F) antreibt, und einen Bremskraft-Einstellmechanismus (124), der die Bremskraft, die auf das Rad (2F) auszuüben ist, einstellt, die Bremssteuervorrichtung (200) umfasst:
eine Erfassungseinheit (203), die konfiguriert ist, um zu erfassen
eine EIN-Operation zum Einschalten der Leistung des Fahrzeugs (10) und eine AUS-Operation zum Ausschalten der Leistung, die EIN-Operation und die AUS-Operation werden jeweils über eine erste Bedienungseingabeeinheit (503), die an dem Fahrzeug (10) vorgesehen ist, ausgeführt, und
einen Betätigungsvorgang zum Betätigen der Antriebsquelle (300) und einen Stoppvorgang zum Stoppen der Betätigung der Antriebsquelle (300), der Betätigungsvorgang und der Stoppvorgang werden jeweils über eine zweite Bedienungseingabeeinheit (504), die an dem Fahrzeug (10) getrennt von der ersten Bedienungseingabeeinheit (503) vorgesehen ist, ausgeführt; und
eine Steuereinheit (204), die konfiguriert ist, um durch Steuern des Bremskrafteinstellmechanismus (124), selektiv entweder eine Antiblockiersteuerung zum Unterdrücken des Blockierens des Rades (2F) oder eine Antiblockier-Reduktionssteuerung zum Verringern eines Unterdrückungsgrades des Blockierens des Rades (2F) über den der Antiblockiersteuerung hinaus, auszuführen,
wobei die Steuereinheit (204) die Antiblockiersteuerung ausführt, indem sie von der Antiblockier-Reduktionssteuerung umschaltet, wenn der Stoppvorgang während der Ausführung der Antiblockier-Reduktionssteuerung erkannt wird, die Antriebsquelle (300) stoppt und das Fahrzeug (10) stoppt.

2. Die Bremssteuervorrichtung (200) gemäß Anspruch 1, wobei
die Steuereinheit (204) weiter konfiguriert ist, um eine Bestimmungssteuerung auszuführen, um zu bestimmen, ob ein Stoppen der Antriebsquelle (300) und ein Stoppen des Fahrzeugs (10) erreicht sind oder nicht, die Bestimmungssteuerung wird ausgeführt, wenn der Stoppvorgang während der Ausführung der Antiblockier-Reduktionssteuerung erfasst wird, und
die Steuereinheit (204) die Antiblockiersteuerung ausführt, indem sie von der Antiblockier-Reduktionssteuerung umschaltet, wenn in der Bestimmungssteuerung festgestellt wird, dass ein Stopp der Antriebsquelle (300) und ein Stopp des Fahrzeugs (10) erreicht sind.

3. Die Bremssteuervorrichtung (200) gemäß Anspruch 2, wobei
die Steuereinheit (204) die Bestimmungssteuerung ausführt, wenn der Stoppvorgang während der Ausführung der Antiblockier-Reduzierungssteuerung bei der Betätigung der Antriebsquelle (300) erfasst wird, und
die Steuereinheit (204) die Ausführung der Bestimmungssteuerung vermeidet, wenn der Stoppvorgang während der Ausführung der Antiblockiersteuerung beim Stoppen der Antriebsquelle (300) erkannt wird.

4. Die Bremssteuervorrichtung (200) gemäß irgendeinem der Ansprüche 1 bis 3, wobei die Steuereinheit (204) die Antiblockiersteuerung fortsetzt, wenn der Betätigungsvorgang erkannt wird, bevor die Antriebsquelle (300) stoppt, nachdem der Stoppvorgang während der Ausführung der Antiblockiersteuerung erkannt wurde.

5. Die Bremssteuervorrichtung (200) gemäß irgendeinem der Ansprüche 1 bis 4, wobei die Steuereinheit (204) die Ausführung der Antiblockiersteuerung fortsetzt, wenn der Betätigungsvorgang erkannt wird, bevor das Fahrzeug (10) stoppt, nachdem der Stoppvorgang während der Ausführung der Antiblockiersteuerung erkannt wurde und die Antriebsquelle (300) stoppt.

6. Ein Fahrzeug (10) mit einem Rad (2F), einem Bremsmechanismus (110), der konfiguriert ist, um eine Bremskraft auf das Rad (2F) auszuüben, einer Antriebsquelle (300), die konfiguriert ist, um das Rad (2F) anzutreiben, einem Bremskraft-Einstellmechanismus (124), der konfiguriert ist, die Bremskraft, die auf das Rad (2F) auszuüben ist, einzustellen, und einer Bremssteuervorrichtung (200) gemäß zumindest einem der Ansprüche 1 bis 5.

7. Ein Bremssteuerverfahren eines Fahrzeugs (10), das Fahrzeug (10) beinhaltet ein Rad (2F), einen Bremsmechanismus (110), der eine Bremskraft auf das Rad (2F) ausübt, eine Antriebsquelle (300), die das Rad (2F) antreibt, und einen Bremskrafteinstellmechanismus (124), der die Bremskraft, die auf das Rad (2F) auszuüben ist, einstellt, das Bremssteuerverfahren umfasst:
Erfassen
einer EIN-Operation zum Einschalten der Leistung des Fahrzeugs (10) und eine AUS-Operation zum Ausschalten der Leistung, die EIN-Operation und die AUS-Operation werden jeweils über eine erste Bedienungseingabeeinheit (503), die an dem Fahrzeug (10) vorgesehen ist, ausgeführt, und
eines Betätigungsvorgangs zum Betätigen der Antriebsquelle (300) und einen Stoppvorgang zum Stoppen der Betätigung der Antriebsquelle (300), der Betätigungsvorgang und der Stoppvorgang werden jeweils über eine zweite Bedienungseingabeeinheit (504), die an dem Fahrzeug (10) getrennt von der ersten Bedienungseingabeeinheit (503) vorgesehen ist, ausgeführt; und
selektives Ausführen, durch Steuern des Bremskrafteinstellmechanismus (124), entweder eine Antiblockiersteuerung zum Unterdrücken des Blockierens des Rades (2F) oder eine Antiblockier-Reduktionssteuerung zum Verringern eines Unterdrückungsgrades des Blockierens des Rades (2F) über den der Antiblockiersteuerung hinaus, und
Ausführen der Antiblockiersteuerung, indem sie von der Antiblockier-Reduktionssteuerung umschaltet, wenn der Stoppvorgang während der Ausführung der Antiblockier-Reduktionssteuerung erkannt wird, die Antriebsquelle (300) stoppt und das Fahrzeug (10) stoppt.

8. Das Bremssteuerverfahren gemäß Anspruch 7, das weiter umfasst:
Ausführen einer Bestimmungssteuerung zum Bestimmen, ob ein Stoppen der Antriebsquelle (300) und ein Stoppen des Fahrzeugs (10) erreicht werden oder nicht, die Bestimmungssteuerung wird ausgeführt, wenn der Stoppvorgang während der Ausführung der Antiblockiersteuerung erfasst wird, und
Ausführen der Antiblockiersteuerung durch Umschalten von der Antiblockier-Reduzierungssteuerung in Reaktion auf die Feststellung in der Bestimmungssteuerung, dass ein Stopp der Antriebsquelle (300) und ein Stopp des Fahrzeugs (10) erreicht sind.

9. Das Bremssteuerverfahren gemäß Anspruch 8, das weiter umfasst:
Ausführen der Bestimmungssteuerung, wenn der Stoppvorgang während der Ausführung der Antiblockier-Reduktionssteuerung beim Betätigen der Antriebsquelle (300) erkannt wird, und
Vermeiden der Ausführung der Bestimmungssteuerung, wenn der Stoppvorgang während der Ausführung der Antiblockiersteuerung beim Stoppen der Antriebsquelle (300) erkannt wird.

10. Das Bremssteuerverfahren gemäß irgendeinem der Ansprüche 7 bis 9, das weiter umfasst:
Fortsetzung der Ausführung der Antiblockiersteuerung, wenn der Betätigungsvorgang erkannt wird, bevor die Antriebsquelle (300) stoppt, nachdem der Stoppvorgang während der Ausführung der Antiblockiersteuerung erkannt wurde.

11. Das Bremssteuerverfahren gemäß irgendeinem der Ansprüche 7 bis 10, das weiter umfasst:
Fortsetzen der Ausführung der Antiblockiersteuerung, wenn der Betätigungsvorgang erkannt wird, bevor das Fahrzeug (10) stoppt, nachdem der Stoppvorgang während der Ausführung der Antiblockiersteuerung erkannt wurde und die Antriebsquelle (300) stoppt.

## Revendications

1. Dispositif de commande de frein (200) d'un véhicule (10), le véhicule (10) comprenant une roue (2F), un mécanisme de frein (110) qui applique une force de freinage à la roue (2F), une source d'entraînement (300) qui entraîne la roue (2F), et un mécanisme de réglage de force de freinage (124) qui règle la force de freinage à appliquer à la roue (2F), le dispositif de commande de frein (200) comprenant :
une unité de détection (203) configurée pour détecter
une opération de MARCHE pour mettre en circuit l'alimentation du véhicule (10) et une opération d'ARRÊT pour mettre hors circuit l'alimentation, chacune de l'opération de MARCHE et de l'opération d'ARRÊT étant exécutée par l'intermédiaire d'une première unité d'entrée d'opération (503) prévue sur le véhicule (10), et
une opération d'actionnement pour actionner la source d'entraînement (300) et une opération d'arrêt pour arrêter l'actionnement de la source d'entraînement (300), chacune de l'opération d'actionnement et de l'opération d'arrêt étant exécutée par l'intermédiaire d'une deuxième unité d'entrée d'opération (504) prévue sur le véhicule (10) séparément de la première unité d'entrée d'opération (503) ; et
une unité de commande (204) configurée pour exécuter sélectivement, en commandant le mécanisme de réglage de force de freinage (124), soit une commande antiblocage pour supprimer le blocage de la roue (2F), soit une commande de réduction antiblocage pour réduire un degré de suppression de blocage de la roue (2F) plus que dans la commande antiblocage,
dans lequel l'unité de commande (204) exécute la commande antiblocage en commutant depuis la commande de réduction antiblocage lorsque l'opération d'arrêt est détectée pendant l'exécution de la commande de réduction antiblocage, la source d'entraînement (300) s'arrête et le véhicule (10) s'arrête.

2. Dispositif de commande de frein (200) selon la revendication 1, dans lequel
l'unité de commande (204) est en outre configurée pour exécuter une commande de détermination pour déterminer si un arrêt de la source d'entraînement (300) et un arrêt du véhicule (10) sont atteints ou non, la commande de détermination étant exécutée lorsque l'opération d'arrêt est détectée pendant l'exécution de la commande de réduction antiblocage, et
l'unité de commande (204) exécute la commande antiblocage en commutant depuis la commande de réduction antiblocage en réponse à la détermination, dans la commande de détermination, qu'un arrêt de la source d'entraînement (300) et qu'un arrêt du véhicule (10) sont atteints.

3. Dispositif de commande de frein (200) selon la revendication 2, dans lequel
l'unité de commande (204) exécute la commande de détermination lorsque l'opération d'arrêt est détectée pendant l'exécution de la commande de réduction antiblocage lors de l'actionnement de la source d'entraînement (300), et
l'unité de commande (204) empêche l'exécution de la commande de détermination lorsque l'opération d'arrêt est détectée pendant l'exécution de la commande de réduction antiblocage lors de l'arrêt de la source d'entraînement (300).

4. Dispositif de commande de frein (200) selon l'une quelconque des revendications 1 à 3, dans lequel l'unité de commande (204) continue d'exécuter la commande de réduction antiblocage lorsque l'opération d'actionnement est détectée avant que la source d'entraînement (300) ne s'arrête après que l'opération d'arrêt est détectée pendant l'exécution de la commande de réduction antiblocage.

5. Dispositif de commande de frein (200) selon l'une quelconque des revendications 1 à 4, dans lequel l'unité de commande (204) continue d'exécuter la commande de réduction antiblocage lorsque l'opération d'actionnement est détectée avant que le véhicule (10) ne s'arrête après que l'opération d'arrêt est détectée pendant l'exécution de la commande de réduction antiblocage et la source d'entraînement (300) s'arrête.

6. Véhicule (10) comprenant une roue (2F), un mécanisme de frein (110) configuré pour appliquer une force de freinage à la roue (2F), une source d'entraînement (300) configurée pour entraîner la roue (2F), un mécanisme de réglage de force de freinage (124) configuré pour régler la force de freinage à appliquer à la roue (2F), et un dispositif de commande de frein (200) selon au moins l'une des revendications 1 à 5.

7. Procédé de commande de frein d'un véhicule (10), le véhicule (10) comprenant une roue (2F), un mécanisme de frein (110) qui applique une force de freinage à la roue (2F), une source d'entraînement (300) qui entraîne la roue (2F), et un mécanisme de réglage de force de freinage (124) qui règle la force de freinage à appliquer à la roue (2F), le procédé de commande de frein comprenant :
la détection
d'une opération de MARCHE pour la mise en circuit de l'alimentation du véhicule (10) et une opération d'ARRÊT pour la mise hors circuit de l'alimentation, chacune de l'opération de MARCHE et de l'opération d'ARRÊT étant exécutée par l'intermédiaire d'une première unité d'entrée d'opération (503) prévue sur le véhicule (10), et
d'une opération d'actionnement pour actionner la source d'entraînement (300) et une opération d'arrêt pour arrêter l'actionnement de la source d'entraînement (300), chacune de l'opération d'actionnement et de l'opération d'arrêt étant exécutée par l'intermédiaire d'une deuxième unité d'entrée d'opération (504) prévue sur le véhicule (10) séparément de la première unité d'entrée d'opération (503) ; et
l'exécution sélective, en commandant le mécanisme de réglage de force de freinage (124), soit d'une commande antiblocage pour supprimer le blocage de la roue (2F), soit d'une commande de réduction antiblocage pour réduire un degré de suppression de blocage de la roue (2F) plus que dans la commande antiblocage, et
l'exécution de la commande antiblocage en commutant depuis la commande de réduction antiblocage lorsque l'opération d'arrêt est détectée pendant l'exécution de la commande de réduction antiblocage, la source d'entraînement (300) s'arrête et le véhicule (10) s'arrête.

8. Procédé de commande de frein selon la revendication 7, comprenant en outre :
l'exécution d'une commande de détermination pour déterminer si un arrêt de la source d'entraînement (300) et un arrêt du véhicule (10) sont atteints ou non, la commande de détermination étant exécutée lorsque l'opération d'arrêt est détectée pendant l'exécution de la commande de réduction antiblocage, et
l'exécution de la commande antiblocage en commutant depuis la commande de réduction antiblocage en réponse à la détermination, dans la commande de détermination, qu'un arrêt de la source d'entraînement (300) et qu'un arrêt du véhicule (10) sont atteints.

9. Procédé de commande de frein selon la revendication 8, comprenant en outre :
l'exécution de la commande de détermination lorsque l'opération d'arrêt est détectée pendant l'exécution de la commande de réduction antiblocage en actionnant la source d'entraînement (300), et
l'empêchement de l'exécution de la commande de détermination lorsque l'opération d'arrêt est détectée pendant l'exécution de la commande de réduction antiblocage lors de l'arrêt de la source d'entraînement (300).

10. Procédé de commande de frein selon l'une quelconque des revendications 7 à 9, comprenant en outre :
la poursuite de l'exécution de la commande de réduction antiblocage lorsque l'opération d'actionnement est détectée avant que la source d'entraînement (300) ne s'arrête après que l'opération d'arrêt est détectée pendant l'exécution de la commande de réduction antiblocage.

11. Procédé de commande de frein selon l'une quelconque des revendications 7 à 10, comprenant en outre :
la poursuite de l'exécution de la commande de réduction antiblocage lorsque l'opération d'actionnement est détectée avant que le véhicule (10) ne s'arrête après que l'opération d'arrêt est détectée pendant l'exécution de la commande de réduction antiblocage et la source d'entraînement (300) s'arrête.
